Europäisches Patentamt

(19) European Patent Office

Office européen des brevets

(11) Numéro de publication: **0 084 489**
**A2**

(12) # DEMANDE DE BREVET EUROPEEN

(21) Numéro de dépôt: **83400076.2**

(22) Date de dépôt: **13.01.83**

(51) Int. Cl.³: **A 47 J 31/36**
**F 04 B 17/04**

(30) Priorité: **13.01.82 FR 8200420**

(43) Date de publication de la demande:
**27.07.83 Bulletin 83/30**

(84) Etats contractants désignés:
**AT BE CH DE FR GB IT LI NL**

(71) Demandeur: **Société civile professionnelle d'Etudes et de Recherche sur les machines à café dite: ERTEMAC**
**21 avenue Beau Pin**
**F-13008 Marseille(FR)**

(72) Inventeur: **Pocachard, Jean-Claude**
**122 rue du Commandant Roland**
**F-13008 Marseille(FR)**

(72) Inventeur: **Pocachard, Thierry**
**21 avenue Beau Pin**
**F-13008 Marseille(FR)**

(74) Mandataire: **Dupuy, René Gaston et al,**
**Cabinet René G. Dupuy & Jean M.L. Loyer 14, Rue La Fayette**
**F-75009 Paris(FR)**

(54) **Machine à café ménagère du type expresso à faible résistance de chauffage et à pompe électromagnétique.**

(57) Cette machine comprend en outre un thermostat T dans le circuit d'alimentation de la résistance R et une diode D dans celui de la pompe P.

Elle comporte en outre les circuits d'alimentation normale de la résistance et de la pompe, des circuits auxiliaires 14, 15, 16, 11 en dépendance du thermostat **T** permettant d'obtenir une marche à régime réduit de la pompe P et de la résistance R au moment du soutirage.

FIG.2

EP 0 084 489 A2

1

L'invention se rapporte aux machines ménagères à fabriquer le café du type "expresso" et plus particulièrement aux machines fonctionnant avec une pompe électromagnétique à haute pression et une mini chaudière mise en température par une résistance électrique de faible puissance (500 watts par exemple) parce que c'est pour de telles machines que l'invention trouve sa pleine utilisation.

Il est bien connu que pour obtenir un bon café, il est nécessaire de produire une eau chaude à environ 90$^c$ et l'idéal serait qu'elle se maintienne à cette température pendant la période de soutirage.

Cet état idéal n'est pas réalisable pour des raisons diverses.

Très souvent la faute en incombe aux thermostats mécaniques qui ont nécessairement une plage différentielle de plusieurs degrés entre la température de coupure et celle de réenclenchement.

Plus cette plage est réduite plus le thermostat est coûteux.

Sur les machines à café ménagère on utilise généralement des thermostats qui sont vendus pour une coupure à 90° et un réenclenchement à 85°.

Or on constate qu'en réalité les températures idéales ne sont pas respectées du fait, soit de perturbations résultant, soit du montage même du thermostat, soit de l'insuffisance de puissance de la résistance de chauffage de l'eau.

Le brevet français n° 82 00369 déposé le 12 janvier 1982 par la Demanderesse donne une solution quant à la régulation de la température pendant le soutirage dans le cas de machine à café pourvue d'une forte résistance pour lesquelles une température moyenne élevée obtenue en élevant la température de coupure n'est pas admissible du fait que le début de soutirage avec une eau

2

trop chaude produirait une brûlure de la mouture, et produirait un goût amer.

Afin de réduire les coûts et l'encombrement d'une machine à café, et également de réduire après coupure du thermostat, l'élévation de température due à l'énergie accumulée dans la résistance, le fabriquant peut être conduit dans son souci de miniaturisation d'adopter une résistance de puissance faible. En puisage continu, après mise en chauffe préalable, la chaleur de départ serait correcte mais s'abaisserait progressivement et le café obtenu serait tiède. Cet inconvénient serait aggravé par la miniaturisation de la machine puisque le "volant thermique" correspondant au volume d'eau préchauffée, serait faible.

C'est à ce problème de régulation de la température dans une machine à café à faible résistance de chauffage, que l'invention entend donner une solution satisfaisante.

Dans une machine classique la simple manoeuvre de l'interrupteur général met sous tension la résistance de chauffage. Lorsque l'eau arrive à la température de coupure du thermostat, la résistance est mise hors circuit, si l'on ferme alors l'interrupteur de la pompe celle-ci se met en marche reloule l'eau froide dans la chaudière ce qui provoque l'évacuation de l'eau chaude vers le filtre.

Pour éviter une chute brutale de température on peut supprimer ou réduire temporairement le débit de la pompe lorsque l'eau atteint la température de réenclenchement du thermostat afin de permettre à la chaudière de remonter en température.

Le brevet n° 2.067.808 déposé le 18 Novembre 1969 enseigne l'usage dans une machine à café d'une pompe électromagnétique qui est le seul type de pompe pouvant modifier son débit en fonction du courant l'alimentant. Ce même brevet décrit également l'usage d'un redresseur,

3

de préférence une diode placée dans le circuit de commande en courant alternatif de la pompe électromagnétique précitée avec pour effet d'alimenter le bobinage de ladite pompe, en redressant une des alternances du secteur et à laisser passer l'autre alternance de sorte que le bobinage est alimenté par un courant variable de signe constant.

On sait que la suppression d'une des alternances permet au ressort de la pompe d'avoir un effet maximal sur le piston-noyau qu'il pousse à l'extrême limite de l'amplitude du déplacement de celui-ci, alors que sans redresseur, ce déplacement est très limité.

L'invention utilise un circuit particulier à deux voies, l'une alimentant la pompe au travers d'une diode (ce qui correspond au débit maximal) l'autre court-circuitant la diode (débit réduit). Cette seconde voie étant en dépendance du thermostat.

On peut aussi penser à combiner les variations du débit avec des variations dans l'alimentation de la résistance en utilisant les alternances coupure/fermeture du thermostat.

D'autres particularités et avantages apparaîtront à la lecture de la description et des revendications qui suivent, faites en regard des dessins sur lesquels :

- *la figure 1* est un schéma électrique d'une machine à café à pompe électromagnétique et diode réalisée selon le brevet français n° 2.067 808;

- *la figure 2* est un schéma électrique d'une machine à café analogue mais perfectionnée selon la présente invention ;

- *la figure 3* est un graphique montrant le comportement de la température de l'eau pendant le soutirage dans le cas de la machine objet de la figure 1 et dans les différentes solutions préconisées par l'invention.

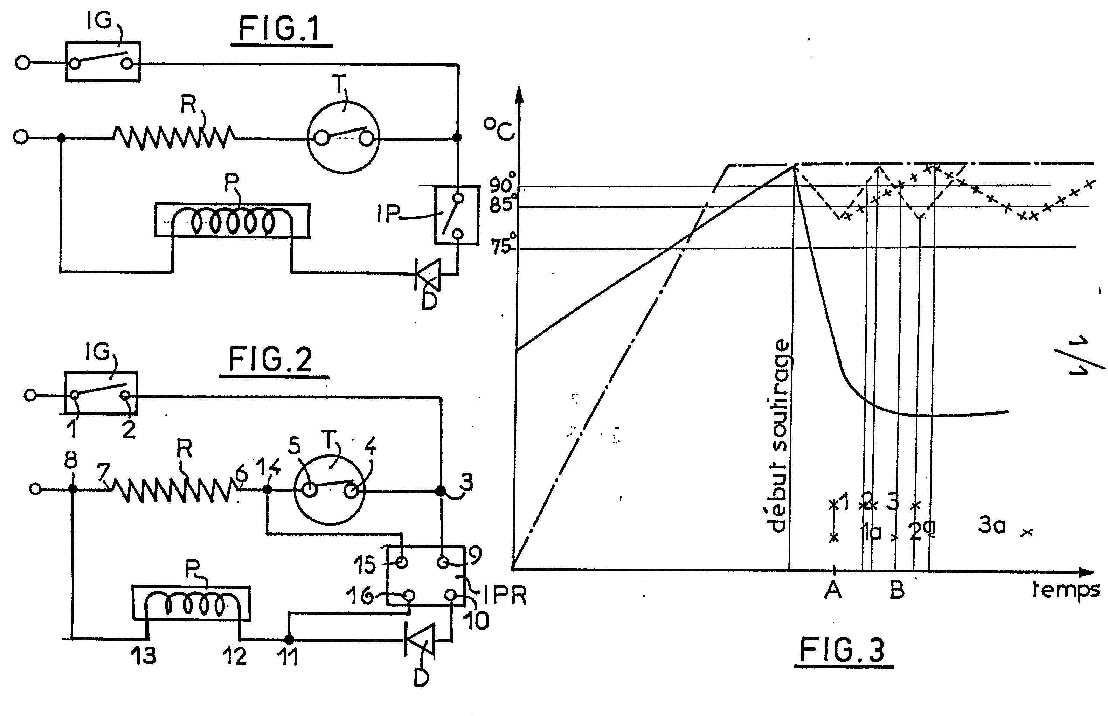

Comme on le voit à la figure 1 dans le schéma classique d'une machine à café selon le brevet n°

4

2.067.808 l'interrupteur général unipolaire IG placé sur une des phases, agit sur la résistance R au travers du thermostat T. Il alimente en outre l'interrupteur unipolaire IP de la pompe P. Entre celle-ci et la sortie de l'interrupteur IP est placé un redresseur ici représenté par une diode D.

Comme précédemment dit, ainsi alimentée, la pompe P fournit un débit maximal variant néanmoins avec la contre-pression due à la perte de charge créée par le gonflement de la mouture.

Dans le schéma de la figure 2, en sus de liaison identique à celle qui vient d'être décrite à l'occasion de la figure 1, il existe un second interrupteur commandant un circuit auxiliaire d'alimentation de la résistance R shuntant le thermostat T et permettant également d'alimenter la bobine de la pompe P sans traverser la diode D.

Avantageusement, ce second interrupteur est lié à l'interrupteur IP dans un interrupteur bipolaire IPR. Il existe donc un premier circuit 1. 2. 3. se divisant ensuite en 4. 5. 6. 7. 8. et en 9. 10. D. 11. 12. 13. 8, et un second circuit 5. 14. 15. 16. 11. 12. 13. 8 et un troisième circuit partant de D. 11. 14. 6. 7. 8. On remarque que le tronçon 14. 15. 16. 11 est commun aux second et troisième circuits.

De ce fait lorsque le thermostat est à température de coupure (par exemple 90°) la pompe P fonctionne à plein régime, mais la résistance n'est alimentée que par une alternance puisqu'elle reçoit alors du courant au travers de la diode.

Au contraire, quand le thermostat est fermé, l'eau est au-dessous de sa température de coupure (par exemple 90°), la pompe alimentée sur les deux alternances ralentit son débit tandis que la résistance est alimentée pleinement.

5

La courbe A (en traits mixtes) de la figure 3 symbolise la courbe idéale qui après la mise en chauffage devrait restée constante légèrement au-dessus de 90° (en raison de l'inertie de la chaudière) même pendant le soutirage.

La courbe B (en trait plein) décrit celle constatée sur une machine à café ayant une résistance modeste. On remarque une aggravation des écarts de température comme résultat de la chute rapide à partir du début du soutirage jusqu'à une température d'équilibre où l'eau est insuffisamment chauffée.

La courbe C (en traits discontinus) se rapporte à une machine du même genre,mais dans laquelle la pompe est alimentée, soit au travers de la diode,soit directement. On remarque qu'il n'y a plus effondrement de la température comme dans le cas de la courbe B,que l'écart entre l'enclenchement du thermostat (85°) et le minimum avant remontée de la température (-80° par exemple) est très réduit.

La phase 1 est sujette à deux influences inverses :

    - allongement en raison de la faible puissance de la résistance,

    - réduction en raison de la réduction du soutirage,

De même la phase 2 est soumise à contradiction

    - faible puissance de la résistance donc moins d'inertie,

    - réduction du soutirage donc plus d'inertie.

Enfin,pour la courbe D (succession de croix)la phase 1a entre le déclenchement et la coupure du thermostat, est réduite du fait de celle du soutirage à faible débit qui permet une remontée rapide de la température dans la chaudière. Par contre la phase 3a est allongée par l'alimentation réduite de la résistance pendant le soutirage.

Il y a réduction de l'inertie au réenclenchement.

0084489

6

# REVENDICATIONS

1.- Machine à café comportant une chaudière alimentée en eau froide par une pompe électromagnétique (P) à ressort de rappel et chauffée par une résistance (R) de faible puissance, mise en service par fermeture d'un thermostat (T) un interrupteur (IP) de commande de cette pompe, un redresseur (D) par exemple une diode placée dans le circuit allant de cet interrupteur à l'une des entrées de la bobine de cette pompe électromagnétique (P), *caractérisée* en ce que ladite pompe (P) peut être soumise à une seconde alimentation court-circuitant ladite diode, cette seconde alimentation (14, 15, 16, 11) étant en dépendance du thermostat (T).

2.- Machine à café selon la revendication 1, *caractérisée* en ce que ladite résistance (R) peut être alimentée par un circuit auxiliaire (11, 16, 15, 14) comprenant ladite diode.

3.- Machine à café selon les deux revendications précédentes, *caractérisée* en ce que le circuit d'alimentation normal et les circuits auxiliaires alimentant l'un, la résistance pour un chauffage réduit, l'autre, la pompe pour un débit minimal soit en dépendance d'interrupteurs à action simultanée ou d'un interrupteur bipolaire (IPR).

o-o-o

IG

FIG.1

R

T

P

IP

D

IG

FIG.2

1    2

8

7    R    6  14    5    T    4

3

15    9

P    IPR

16    10

13    12    11

D

°C

90°
85°

75°

début soutirage

*1  *2   3  *

1a   *  2a

3a  *

A    B    temps

FIG.3

1/1

0084489